# EUROPÄISCHE PATENTSCHRIFT

(11) **EP 2 932 081 B1**
(45) Veröffentlichungstag und Bekanntmachung des Hinweises auf die Patenterteilung: **08.03.2017**
(21) Anmeldenummer: 13802937.6
(22) Anmeldetag: 09.12.2013
(51) Int. Cl.: F16K 11/052, F16K 27/02, F16K 31/04, F02M 26/70, F02M 26/51, F02D 9/10

(54) **VENTIL**
VALVE
SOUPAPE

(30) Priorität: 17.12.2012 DE 102012223466
(43) Veröffentlichungstag der Anmeldung: 21.10.2015
(73) Patentinhaber: Continental Automotive GmbH, 30165 Hannover (DE)
(72) Erfinder: GRÜNEIS, Stefan Oskar, 61348 Bad Homburg (DE)
(86) Internationale Anmeldenummer: PCT/EP2013/075924
(87) Internationale Veröffentlichungsnummer: WO 2014/095450

(56) Entgegenhaltungen:
- EP-A1- 2 497 921
- EP-A2- 1 335 158
- DE-A1-102009 049 842
- DE-C- 499 691
- US-A1- 2005 241 702
- US-A1- 2010 206 274

## Beschreibung

Gegenstand der Erfindung ist ein Ventil zur Regelung zweier Gasströme, wie es gemäss den oberbegrifflichen Merkmalen von Anspruch 1 beispielsweise aus EP-A-1 335 158 bekannt ist.

Derartige Ventile werden in Kraftfahrzeugen als Luft- und Abgasventile eingesetzt und sind somit bekannt. Dabei strömen durch die Kanäle mit den Klappen Gasströme, die je nach Situation einzeln oder in bestimmten Verhältnissen gemischt dem dritten Kanal zugeführt werden sollen. Das bedeutet, dass dem Verdrehwinkel der ersten Klappe ein bestimmter Verdrehwinkel der zweiten Klappe zugeordnet ist. Danach entspricht der Verdrehwinkel der ersten Klappe einer bestimmten Betriebssituation, zu der der Verdrehwinkel der zweiten Klappe angepasst werden muss. Die Anpassung des Verdrehwinkels der ersten Klappe an die entsprechende Betriebssituation wird mittels der Ansteuerung des Elektromotors realisiert. Das dementsprechende Verstellen der zweiten Klappe wird dann durch den Übertragungsmechanismus bewerkstelligt. Dazu ist es bekannt, die Klappen in einem Gehäuse anzuordnen. Aufgrund der Kanalanordnung hat diese Einfluss auf die Anordnung der Klappen, der Wellen und des Antriebs. Als Folge davon besitzt ein solches Gehäuse einen relativ komplexen Aufbau.

Der Erfindung liegt daher die Aufgabe zugrunde, ein Ventil zu schaffen, dass insbesondere in Bezug auf das Gehäuse einen einfachen Aufbau besitzt und eine optimale Anpassung des jeweiligen Gehäuseteils an das Einsatzgebiet ermöglicht.

Gelöst wird die Aufgabe bei einem gattungsgemässen Ventil durch die im kennzeichnenden Teil von Anspruch 1 definierten Merkmale.

Mit der Anordnung jeder Klappe in einem Gehäuse lassen sich die beiden Einzelgehäuse einfacher gestalten, wodurch sie einfacher herzustellen sind. Zudem lassen sich die Einbauten, wie Klappe und Welle, leichter montieren. Der zusätzliche Montageschritt zum Verbinden der beiden einzelnen Gehäuse bedeutet dabei einen wesentlich geringeren Aufwand. Ein weiterer Vorteil besteht darin, dass bei den Einzelgehäusen auf bereits vorhandene Gehäuse zurückgegriffen werden kann, was ebenfalls zur Vereinfachung des Ventils beiträgt.

Gemäß einer vorteilhaften Ausgestaltung sind die beiden Gehäuse miteinander verschraubt. Auf diese Weise wird eine sichere und vor allem gasdichte Verbindung beider Gehäuse erreicht. Ein weiterer Vorteil besteht darin, dass in jedes Gehäuse vorab die Klappe mit der Welle montiert werden kann, bevor beide Gehäuse miteinander verbunden werden.

Erfindungsgemäss bestehen die beiden Gehäuse aus unterschiedlichen Materialien. Die unterschiedliche Materialwahl ermöglicht eine optimale Anpassung des jeweiligen Gehäuses an das Einsatzgebiet. So kann ein thermisch hoch belastetes Gehäuse, welches z. B. einen Abgasstrom leitet, aus einem Metall oder einer Metalllegierung, vorzugsweise Aluminiumguss, hergestellt werden, während das weniger stark belastete Gehäuse aus einem Kunststoff bestehen kann. Neben den geringeren Kosten ist hierbei das geringere Gewicht ein wesentlicher Vorteil.

Der Vorteil der Gestaltung des Ventils aus zwei Gehäusen kommt besonders dann zum Tragen, wenn die Kanalgestaltung aufwändiger ist. So erlauben die getrennten Gehäuse eine optimale Anpassung an den jeweiligen Kanal, während die Verbindung der beiden Gehäuse anschließend gestaltet werden kann. Eine solche Kanalge-staltung kann z. B. schon dann gegeben sein, wenn die beiden Kanäle in einem Winkel, vorzugsweise rechtwinklig, zueinander angeordnet sind.

Um beide Gasströme mit nur einem elektromotorischen Antrieb anzusteuern, sind beide Klappen über einen Übertragungsmechanismus miteinander verbunden. Die Bewegung der beiden Klappen zueinander lassen sich an eine Vielzahl verschiedener Bewegungsabläufe anpassen. In einer konstruktiv besonders einfachen Ausgestaltung erfolgt dies mit zwei Hebeln und einer sie verbindenden Koppelstange.

An einem Ausführungsbeispiel wird die Erfindung näher beschrieben. Es zeigt in:

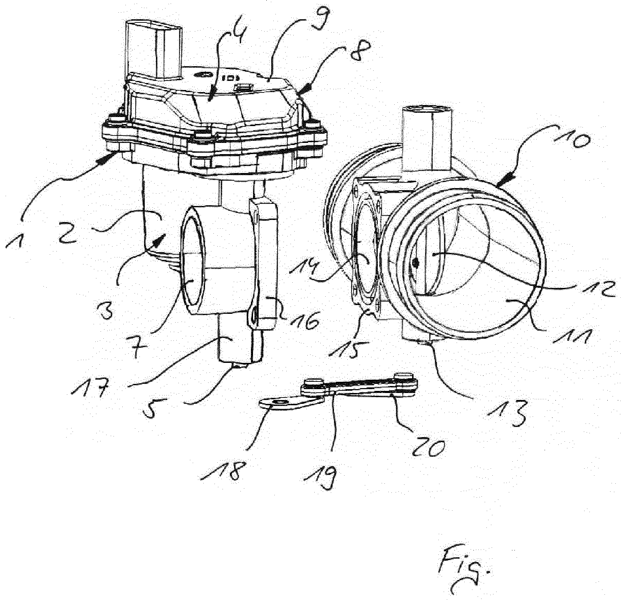

- Fig. 1: eine Explosionsdarstellung des erfindungsgemäßen Ventils.

Das in Figur 1 dargestellte Ventil besteht aus einem ersten Gehäuse 1 mit einer Kammer 2, in der ein Elektromotor 3 angeordnet ist. Über ein Getriebe 4 wird eine Welle 5 angetrieben. An der Welle 5 ist eine erste Klappe befestigt, die einen ersten Kanal 7 durch Drehen der Welle 5 öffnet oder verschließt. Das Getriebe 4 ist in einer weiteren Kammer 8 des ersten Gehäuses 1 angeordnet, welche mit einem Deckel 9 abgedeckt ist. Das Ventil besitzt weiter ein zweites Gehäuse 10 mit einem zweiten Kanal 11, in dem eine zweite Klappe 12 angeordnet ist. Die zweite Klappe 12 ist an einer zweiten Welle 13 befestigt, so dass die zweite Klappe 12 bei Drehung der zweiten Welle 13, den zweiten Kanal 11 öffnet oder verschließt. In Strömungsrichtung nach der Klappe 12 besitzt das zweite Gehäuse 10 eine in den zweiten Kanal 11 mündende Öffnung 14, die an der Außenseite einen Flansch 15 aufweist. Der Flansch 15 ist mit einem weiteren Flansch 16 verbunden ist, der am Ende des ersten Kanals 7 des ersten Gehäuses 1 angeordnet ist.

Die erste Welle 5 durchdringt das erste Gehäuse 1 nach der Lagerbohrung 17. An dem Ende der Welle 5 ist ein erster Hebel 18 befestigt, der über eine Koppelstange 19 mit einem zweiten Hebel 20 verbunden ist, der wiederum am Ende der zweiten Welle 13 befestigt ist. In Abhängigkeit von der Anordnung der Hebel 18, 20 zur Lage der jeweiligen Klappe lassen sich verschiedene Mischungsverhältnisse der beiden Gasströme bei entsprechenden Drehwinkeln der Klappen erzeugen. Über den zweiten Kanal 11 strömt Frischluft, dem über den ersten Kanal 7 Abgas zugemischt wird. Aufgrund der hohen Temperaturen des Abgases besteht das erste Gehäuse 1 aus einer Aluminiumlegierung. Das zweite Gehäuse 10 besteht aus Kunststoff, da das Abgas zur kühlen Frischluft zugemischt wird und so das Gehäuse 10 thermisch wesentlich weniger belastet wird.

## Patentansprüche

1. Ventil zur Regelung zweier Gasströme, mit zwei Kanälen (7, 11), in denen je eine Klappe, die auf einer Welle (5, 13) drehbar gelagert ist, angeordnet ist, mit einem Elektromotor (3), der eine Welle (5) antreibt und mit einem Übertragungsmechanismus (18,19,20) , der in Abhängigkeit von der Bewegung der ersten Klappe, die zweite Klappe antreibt, wobei jede Klappe in einem separaten Gehäuseteil (1, 10) angeordnet ist und die beiden Gehäuseteile (1, 10) miteinander verbunden sind **dadurch gekennzeichnet, dass** der Elektromotor die Welle über ein Getriebe antreibt, und dass die beiden Gehäuseteile (1, 10) aus unterschiedlichen Materialien, vorzugsweise Metall und Kunststoff, bestehen.

2. Ventil nach Anspruch 1, **dadurch gekennzeichnet, dass** die beiden Gehäuseteile (1, 10) miteinander verschraubt sind.

3. Ventil nach einem der vorhergehenden Ansprüche, **dadurch gekennzeichnet, dass** die beiden Kanäle (7, 11) in einem Winkel, vorzugsweise rechtwinklig, zueinander angeordnet sind.

4. Ventil nach einem der vorhergehenden Ansprüche, **dadurch gekennzeichnet, dass** die beiden Klappen (12) über den Übertragungsmechanismus (18 - 20) miteinander verbunden sind.

## Claims

1. Valve for regulating two gas flows, having two ducts (7, 11) in which there is arranged in each case one flap which is mounted rotatably on a shaft (5, 13), having an electric motor (3) which drives a shaft (5), and having a transmission mechanism (18, 19, 20) which drives the second flap in a manner dependent on the movement of the first flap, wherein each flap is arranged in a separate housing part (1, 10) and the two housing parts (1, 10) are connected to one another, **characterized in that** the electric motor drives the shaft via a gearing, and **in that** the two housing parts (1, 10) are composed of different materials, preferably metal and plastic.

2. Valve according to Claim 1, **characterized in that** the two housing parts (1, 10) are screwed together.

3. Valve according to one of the preceding claims, **characterized in that** the two ducts (7, 11) are arranged at an angle, preferably at right angles, to one another.

4. Valve according to one of the preceding claims, **characterized in that** the two flaps (12) are connected to one another by way of the transmission mechanism (18 - 20).

## Revendications

1. Soupape de régulation de deux flux gazeux, comprenant deux canaux (7, 11) dans lesquels est disposé à chaque fois un clapet qui est supporté à rotation sur un arbre (5, 13), avec un moteur électrique (3) qui entraîne un arbre (5) et avec un mécanisme de transmission (18, 19, 20) qui entraîne le deuxième clapet en fonction du déplacement du premier clapet, chaque clapet étant disposé dans une partie de boîtier séparée (1, 10) et les deux parties de boîtier (1, 10) étant connectées l'une à l'autre,
**caractérisée en ce que** le moteur électrique entraîne l'arbre par le biais d'une transmission et **en ce que** les deux parties de boîtier (1, 10) se composent de matériaux différents, de préférence de métal et de plastique.

2. Soupape selon la revendication 1, **caractérisée en ce que** les deux parties de boîtier (1, 10) sont vissées l'une à l'autre.

3. Soupape selon l'une quelconque des revendications précédentes, **caractérisée en ce que** les deux canaux (7, 11) sont disposés suivant un certain angle, de préférence sont disposés à angle droit l'un par rapport à l'autre.

4. Soupape selon l'une quelconque des revendications précédentes, **caractérisée en ce que** les deux clapets (12) sont connectés l'un à l'autre par le biais du mécanisme de transmission (18-20).
